Europäisches Patentamt

European Patent Office

Office européen des brevets

(11) Veröffentlichungsnummer: **0 222 733**
**A1**

## (12) EUROPÄISCHE PATENTANMELDUNG

(21) Anmeldenummer: 86890297.4

(22) Anmeldetag: 04.11.86

(51) Int. Cl.⁴: **B 62 K 3/04**
**B 62 K 19/00**

(30) Priorität: 11.11.85 AT 3262/85

(43) Veröffentlichungstag der Anmeldung:
20.05.87 Patentblatt 87/21

(84) Benannte Vertragsstaaten:
CH DE FR IT LI NL

(71) Anmelder: **Steyr-Daimler-Puch Aktiengesellschaft**
**Kärntnerring 7**
**A-1010 Wien (AT)**

(72) Erfinder: **Spekner, Fritz**
**Liebenauer Hauptstrasse 283A**
**A-8041 Graz (AT)**

(54) Fahrradrahmen.

(57) Ein Fahrradrahmen, insbesondere für Renn- oder Sporträder weist einen etwa V-förmigen Rahmenhauptteil (1) auf.
Dieser besteht aus dem Steuerkopfrohr (2), dem schräg
abwärts zum Tretkurbellagerbereich führenden unteren Rahmenrohr (4) und dem von diesem Bereich schräg aufwärts
gerichteten Sitzrohr (5). Das Steuerkopfrohr (2) und das
Sitzrohr (5) sind durch das obere Rahmenrohr (7) verbunden.
Um ohne wesentliche Erhöhung des technischen Aufwandes
verschiedene Rahmengrößen liefern zu können, besitzt das
Sitzrohr (5) einen es ergänzenden, mit ihm verklebten,
verschraubten oder verschweißten, in seiner Länge wählbaren
und von der Sattelstütze (6) durchsetzten Oberteil (5a). Das in
seiner Länge entsprechend wählbare obere Rahmenrohr (7) ist
einerseits am Oberteil (5a), anderseits am Steuerkopfrohr (2)
um zur Tretkurbelachse parallele Achsen (8) schwenkbar
befestigt.

FIG.1

EP 0 222 733 A1

**Beschreibung**

Die Erfindung betrifft einen Fahrradrahmen, insbesondere für Renn- oder Sporträder, mit einem etwa V-förmigen Rahmenhauptteil, der aus dem Steuerkopfrohr, dem von diesem schräg abwärts zum Tretkurbellagerbereich führenden unteren Rahmenrohr und dem vom Tretkurbellagerbereich schräg aufwärts gerichteten Sitzrohr besteht, wobei Steuerkopfrohr und Sitzrohr durch das obere Rahmenrohr verbunden sind.

Bei üblichen Fahrradrahmen dieser Art ist das Sitzrohr von vornherein mit einer bestimmten Länge ausgebildet und besitzt an seinem oberen Ende eine starre Muffe, in der das obere Rahmenrohr festsitzt, das mit seinem Vorderende in einer ebensolchen Muffe am Steuerkopfrohr steckt. Es ist daher die sogenannte Rahmenhöhe, das ist der Abstand zwischen dem Tretkurbellager und der Anschlußmuffe des oberen Rahmenrohres am Sitzrohr unveränderbar. Insbesondere bei Renn- und Sporträdern soll aber die Rahmenhöhe und auch die Rahmenlänge, d.h. praktisch die Länge des oberen Rahmenrohres genau den Körpermaßen des Fahrers angepaßt sein. Um dies zu erreichen, müssen bisher in Höhe und Länge verschieden große Rahmen hergestellt werden, die jeweils auch verschiedene Guß- oder Preßwerkzeuge erfordern und damit den Herstellungsaufwand wesentlich erhöhen und die Lagerhaltung erschweren. Es ist zwar bekannt und üblich, die Sattelstütze im Sitzrohr verschiebbar und in verschiedenen Stellungen festklemmbar zu lagern, so daß die Entfernung des Sattels vom Tretkurbellager verändert werden kann, jedoch reicht diese Variationsmöglichkeit für Renn- oder Sporträder nicht aus, weil bei zu weit herausgezogener Sattelstütze bzw. zu hoch über dem oberen Rahmenrohr angeordnetem Sattel die erforderliche Stabilität des Rahmens verloren geht.

Demnach liegt der Erfindung die Aufgabe zugrunde, diesen Nachteil zu beseitigen und einen Fahrradrahmen der eingangs geschilderten Art zu schaffen, der ohne wesentliche Erhöhung des technischen Aufwandes in verschiedenen Größen lieferbar und damit von vornherein an die Körpermaße des Fahrers optimal anpaßbar ist.

Die Erfindung löst die gestellte Aufgabe dadurch, daß das Sitzrohr einen es ergänzenden, mit ihm verklebten, verschraubten oder verschweißten, in seiner Länge wählbaren und von der Sattelstütze durchsetzten Oberteil besitzt und das in seiner Länge entsprechend wählbare obere Rahmenrohr einerseits an diesem Oberteil, anderseits am Steuerkopfrohr um zur Tretkurbelachse parallele Achsen schwenkbar befestigt ist.

Zur Anpassung an die verschiedenen Körpermaße des Fahrers brauchen nun nicht mehr verschiedene Guß- und Preßwerkzeuge verwendet zu werden, da der Rahmenhauptteil für alle Rahmengrößen gleich bleibt. Es wird nur jeweils der Oberteil des Sitzrohres durch einen längeren oder kürzeren Rohrteil ersetzt und dementsprechend auch ein längeres oder kürzeres oberes Rahmenrohr gewählt. Diese Ausbildung ist dadurch ermöglicht, daß das obere Rahmenrohr nicht mehr in starren Buchsen am Steuerkopfrohr bzw. am Sattelrohr steckt, sondern mit diesen Teilen schwenkbar verbunden ist. Es ist selbstverständlich, daß der Oberteil des Sattelrohres mit letzterem nicht verklebt, verschraubt oder verschweißt, sondern auch in anderer vom Rohrwerkstoff abhängiger geeigneter Weise verbunden sein kann.

Das Steuerkopfrohr wird man zweckmäßigerweise von vornherein für einen vergleichsweise hoch angeordneten Lenker, also für einen Fahrer mit großen Körpermaßen auslegen. Sollte der Lenker dann für einen wesentlich kleineren Fahrer bestimmt sein, so läßt sich das Steuerkopfrohr ohne wesentlichen Aufwand verkürzen, und es braucht nur die Aufnahme für das obere Lenkkopflager eingearbeitet zu werden. Selbstverständlich muß dabei die Anlenkstelle des oberen Rahmenrohres am Steuerkopfrohr entsprechend tief angesetzt sein.

Um für das obere Rahmenrohr trotz verschiedener Länge gleiche Verbindungsteile zum Oberteil des Sattelrohres bzw. zum Steuerkopfrohr verwenden und damit den Herstellungsaufwand noch weiter verringern zu können, ist das obere Rahmenrohr mit vorzugsweise gabelförmigen Endstücken versehen, zwischen deren Schenkel eine Nase od. dgl. des Sitzrohr-Oberteiles bzw. des Steuerkopfrohres einragt. Diese Endstücke sind mit dem oberen Rahmenrohr in gleicher Weise wie der Oberteil mit dem Sattelrohr bleibend verbunden.

In der Zeichnung ist der Erfindungsgegenstand beispielsweise dargestellt, und zwar zeigen

Fig. 1 einen Fahrradrahmen in Ansicht und

Fig. 2 die Verbindung des oberen Rahmenrohres mit dem Steuerkopfrohr als Detail im größeren Maßstab.

Der Fahrradrahmen weist einen etwa V-förmigen Rahmenhauptteil 1 auf, der aus dem Steuerkopfrohr 2, dem von diesem schräg abwärts zum Bereich des Drehkurbellagers 3 führenden unteren Rahmenrohr 4 und dem vom Tretkurbellagerbereich schräg aufwärts gerichteten Sitzrohr 5 besteht, das die Sattelstütze 6 aufnimmt. Das Steuerkopfrohr 2 und das Sitzrohr 5 sind durch das obere Rahmenrohr 7 miteinander verbunden.

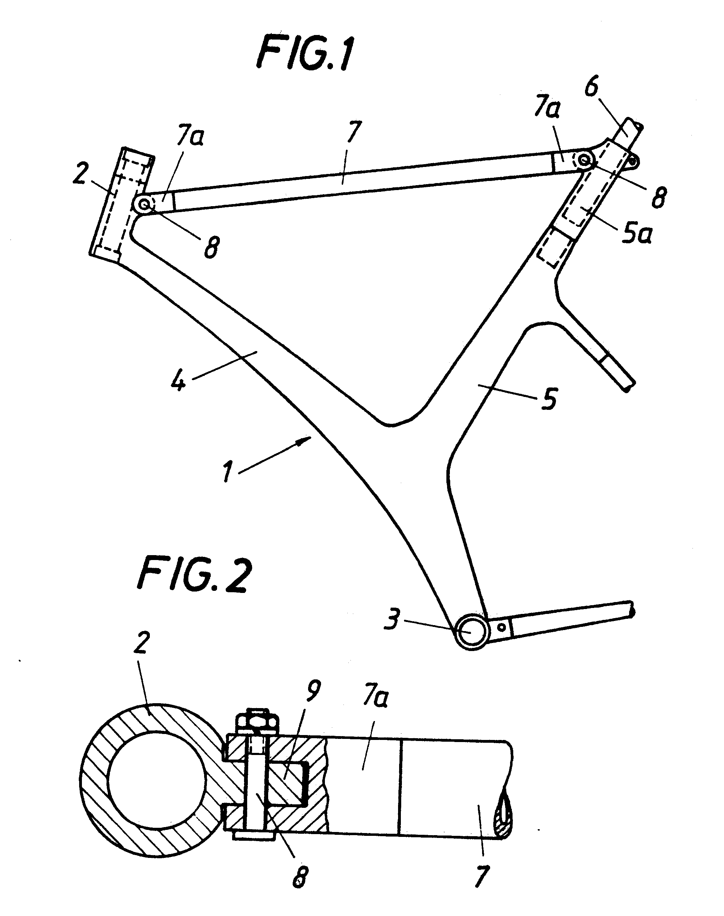

Erfindungsgemäß weist nun das Sitzrohr 5 einen es ergänzenden und mit ihm in geeigneter Weise fest verbundenen Oberteil 5a auf, der in seiner Länge entsprechend der Körpermaße des Fahrers verschieden gewählt werden kann und von der Sattelstütze 6 durchsetzt wird. Das obere Rahmenrohr 7 ist in seiner Länge ebenfalls wählbar und einerseits an dem Oberteil 5a, anderseits am Steuerkopfrohr 2 um zur Tretkurbelachse parallelen Achsen 8 schwenkbar befestigt. Dabei ist das obere Rahmenrohr 7 mit gabelförmigen Endstücken 7a versehen, zwischen deren Schenkel eine Nase 9 od. dgl. des Sitzrohroberteiles 5a bzw. des Steuerkopfrohres 2 einragt (Fig. 2). Zur Anpassung an verschiedene Körpermaße des Fahrers kann, falls erforderlich, das Steuerkopfrohr 2 gekürzt werden, wie dies strichpunktiert angedeutet ist.

Es überschreitet nicht den Rahmen der Erfindung, wenn die Rahmenrohre jeweils aus zwei Halbschalen zusammengesetzt oder in sonstiger Weise von der kreiszylindrischen Rohrform abweichend ausgebildet sind.

**Patentansprüche**

1. Fahrradrahmen, insbesondere für Renn- oder Sporträder, mit einem etwa V-förmigen Rahmenhauptteil, der aus dem Steuerkopfrohr, dem von diesem schräg abwärts zum Tretkurbellagerbereich führenden unteren Rahmenrohr und dem vom Tretkurbellagerbereich schräg aufwärts gerichteten Sitzrohr besteht, wobei Steuerkopfrohr und Sitzrohr durch das obere Rahmenrohr verbunden sind, dadurch gekennzeichnet, daß das Sitzrohr (5) einen es ergänzenden, mit ihm verklebten, verschraubten oder verschweißten, in seiner Länge wählbaren und von der Sattelstütze (6) durchsetzten Oberteil (5a) besitzt und das in seiner Länge entsprechend wählbare obere Rahmenrohr (7) einerseits an diesem Oberteil (5a), anderseits am Steuerkopfrohr (2) um zur Tretkurbelachse parallele Achsen (8) schwenkbar befestigt ist.

2. Fahrradrahmen nach Anspruch 1, dadurch gekennzeichnet, daß das obere Rahmenrohr (7) mit vorzugsweise gabelförmigen Endstücken (7a) versehen ist, zwischen deren Schenkel eine Nase (9) od. dgl. des Sitzrohr-Oberteiles (5a) bzw. des Steuerkopfrohres (2) einragt.

0222733

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | EP-A-0 163 988 (PAIOLI) <br> * Figuren; Seite 4, Zeilen 1-5, Zeile 26 - Seite 5, Zeile 5 * <br><br> --- | 1,2 | B 62 K 3/04 <br> B 62 K 19/00 |
| A | EP-A-0 108 327 (K. PAPP) <br> * Figuren 1,4-6 * <br><br> --- | 1,2 | |
| A | CH-A- 260 473 (C. GUFFANTI) <br> * Figuren * <br><br> ----- | 1 | |
| | | | **RECHERCHIERTE SACHGEBIETE (Int. Cl.4)** <br><br> B 62 K |

Der vorliegende Recherchenbericht wurde für alle Patentansprüche erstellt.

| Recherchenort | Abschlußdatum der Recherche | Prüfer |
|---|---|---|
| DEN HAAG | 04-02-1987 | FRANKS B.G. |